# EUROPEAN PATENT SPECIFICATION

(11) **EP 1 595 116 B1**
(45) Date of publication and mention of the grant of the patent: **24.06.2009**
(21) Application number: 04700459.3
(22) Date of filing: 07.01.2004
(51) Int. Cl.: G01G 19/414, G01G 19/07, G01G 3/15, G01G 7/00

(54) **METHOD AND DEVICES FOR MEASURING WEIGHT**
VERFAHREN UND VORRICHTUNGEN ZUR GEWICHTSMESSUNG
PROCEDE ET DISPOSITIFS DE MESURE DE POIDS

(30) Priority: 19.02.2003 GB 0303841
(43) Date of publication of application: 16.11.2005
(73) Proprietor: ABAS Incorporated, Chicago, Illinois 60706 (US)
(72) Inventor: MAY, Lutz, Axel, 82538 Gelting (DE)
(74) Representative: Becker Kurig Straus
(86) International application number: PCT/EP2004/000044
(87) International publication number: WO 2004/074787

(56) References cited:
- EP-A- 1 376 078
- DE-A- 10 216 723
- US-A- 6 129 168

## Description

The present invention relates to a method and devices for measuring the weight of a load. In particular, the present invention relates to measuring the weight of a load using a number of magnetic field sensors.

In the automotive industry, it is known to attach a plurality of sensors to a car seat to measure the weight of an occupant of the car. These sensors are used, for example, to control the mechanism for deploying an airbag if the occupant is of insufficient weight to withstand the full force of the inflating airbag and could therefore be injured as a result of deployment. To reduce the risk to the occupants of a car in the event of a crash, the airbag is controlled or prevented from deploying if the sensors determine that the weight of the occupant is insufficient to withstand the forces of an inflating airbag.

Conventional sensors used in such systems are strain gauges attached to the frame of the seat. However, as the strain gauges are typically glued onto the metal surface of the frame holding the seat, they tend not to keep their calibration value over time and are subject to hysteresis problems. In view of this, it is necessary to replace the strain gauges regularly, which is both time consuming and uneconomical. Furthermore, it means that the performance of the strain gauges should be monitored to detect the time at which they are required to be replaced.

US 6,129,168 describes to a weight sensor means for the use in a safety restraint system. Said sensor means comprises two portions and a support link in which, if subjected to a load, a vertical displacement is caused resulting in a signal based on the change of magnetic field strength and proportional to the position of a magnet relative to a Hall effect sensor.

The present invention is directed to ameliorating or overcoming the problems of prior art methods and systems.

According to a first aspect of the invention there is provided a device for measuring the weight of a load, comprising a first portion, a second portion and an elongate member, the elongate member attached to the first and second portions, the device further comprising one or more magnetic field sensor elements, the elongate member including a magnetised region generating a magnetic field that is a function of the movement of the elongate member, and the one or more sensor elements located in a cavity in one or other of the first or second portions and being responsive to the emanated magnetic field; characterized in that said elongate member is substantially cylindrical with a reduced diameter at a location along the member to increase sensitivity of the device; and said magnetic field sensor elements are adapted to detect distortion of the magnetic field emanating from the elongate member when a load is imposed on one or other of the first or second portions; wherein the distortion of the magnetic field emanating from the elongate member between the first and second portions corresponds to the weight of the applied load.

Preferably, the cavity is located in and extends axially within one or other of the first or section portions.

Preferably, one or more of the first portion, the second portion and the elongate member are integrally formed.

In a further preferred embodiment, one or other of the first or second portions is attachable to a first element which is movable on application of a load and the other or the first or second portions is attachable to a second element which is not movable on application of the applied load.

The elongate m ember may be a shaft m ember which may be substantially cylindrical in cross-section, and the diameter of the elongate member may be reduced at a location along the member to increase sensitivity of the device. The elongate member could be hollow along its length, solid or have an axially extending bore extending along a portion of its length.

Preferably, the elongate member is enclosed within one or other of the first or second portions in the cavity therein, and one or other of the first or second portions may extend into the cavity in the other of the first or second portions.

Preferably, the first and second portions are arranged to be spatially separate before application of the load and/or until the elongate member breaks under an overload condition.

The one or more sensor elements may preferably comprise one or more magnetoresistive devices, Hall effect transducers, and/or one or more saturating core inductors (coils), and the one or more sensor elements comprise one or more coils locatable in the cavity. In such a preferred embodiment, the one or more coils are arranged to detect movement of the elongate member under load. Preferably, the elongate member has one or more magnetised regions, the one or more sensor elements being responsive to a load dependent field emanated by the one or more magnetised regions.

The device may further comprise electronic circuitry to process the output of the sensor elements to determine the weight of the applied load in use, and the electronic circuitry may be located within or outside one or other or both of the first or second portions.

Preferably, the elongate member is screwed or press-fitted into the first and/or the second portion.

In a preferred embodiment, the device is adapted to be attached to a seat of a vehicle, such as a car, van, or truck and/or the body of the vehicle to measure the weight of an occupant sitting in the seat in use, and the one or more sensor elements are adapted to measure the weight of a load of up to around 1400 kilograms. In such an embodiment, one or more of the above-defined devices may be attached to each seat, and the one or more sensors of each device are preferably connectable to a mechanism for controlling deployment of an airbag in the vehicle such that if the sensor elements determine that the weight of an occupant of a seat is below a predetermined amount, deployment of the airbag is controlled. In a preferred embodiment, if the one or more sensors determine that there is a childseat attached to the seat, for example a rear-facing childseat, or if there is a child in the seat under a particular age, for example six years, the deployment of the airbag is inhibited. Preferably, the device includes more than one sensor element, and preferably two or four sensor elements, the sensor elements being connectable in series and the outputs of the sensor elements combined to determine the total weight of the applied load in use.

According to a second aspect of the present invention there is provided a method for measuring the weight of a load using a device defined above.

According to a third aspect of the invention there is provided a device for measuring the weight of a load, comprising a first portion, a second portion and an elongate member, the elongate member being attachable to the first and second portions, the device further comprising one or more sensor elements for detecting movement of the elongate member when a load is imposed on one or other of the first or second portions, the detected movement of the elongate member differentially between the first and second portions corresponding to the weight of the applied load, the elongate member including a magnetised region generating a magnetic field that is a function of the movement of the elongate member, and the one or more sensor elements being locatable in a cavity in one or other of the first or second portions and being responsive to the emanated magnetic field.

According to a fourth aspect of the invention there is provided a system for measuring the weight or weight distribution of a load comprising one or more of the devices defined above, and preferably three or four devices. Preferably, the outputs of the sensor elements of each device are connected to determine the total weight or weight distribution of the applied load in use.

Preferred embodiments of the present invention will now be described by way of example and with reference to the accompanying drawings in which:
Figure 1 is a cut-away elevation of a preferred embodiment of a device according to the invention;
Figure 2 is a further cut-away elevation of the device of Figure 1;
Figure 3a is a schematic cross-section of an embodiment of the device shown in Figures 1 and 2 in the unloaded condition;
Figure 3b is a schematic cross-section of an embodiment of the device shown in Figures 1 and 2 in the loaded condition;
Figure 4 is a schematic cross-section of an embodiment of the device of Figures 1 and 2;
Figure 5a is a schematic showing a sensor arrangement for use in the device of Figures 1 and 2 in which the sensor is oriented in the axial direction;
Figure 5b is a schematic showing a sensor arrangement for use in the device of Figures 1 and 2 in which the sensor is oriented in the radial direction;
Figure 5c is a schematic showing a sensor arrangement of two sensors for use in the device of Figures 1 and 2;
Figure 5d is a schematic showing a sensor arrangement of four sensors for use in the device of Figures 1 and 2; and
Figure 6 is a schematic elevation of an elongate member for use in the device of Figures 1 and 2.

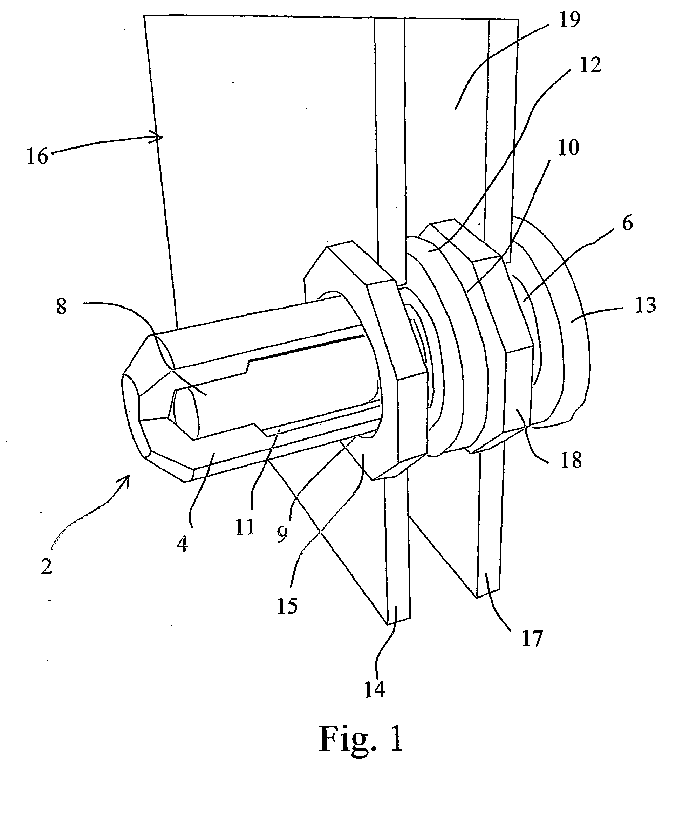

Figures 1 to 4 show a device 2 according to a preferred embodiment of the invention for measuring the weight of a load (not shown). The device 2 comprises a first bolt portion 4, a second bolt portion 6 and an elongate member or shaft 8. One end of the elongate member 8 is screwed into, press fitted into or otherwise attached to a first end 9 of the second bolt portion 6 and the other end of the elongate member 8 is inserted through an aperture in a first end 10 of the first bolt portion 4 and positioned to extend through an axially extending bore within the first bolt portion 4. The elongate member 8 is retained within the axially extending bore of the first bolt portion 4 by, for example, screwing or press-fitting the end of the elongate member 8 not attached to the second bolt portion 6, into the closed end of the bore.

The bore through the first bolt portion 4 within which the elongate member 8 is retained is preferably stepped such that a circumferentially extending annular cavity 11 is formed between the outer peripheral surface of the elongate member 8 and the inner surface of the first bolt portion 4.

The first e nd 10 of the first bolt portion 4 has a circumferentially extending flange 12 formed thereon and the second end of the second bolt portion 6 has a circumferentially extending flange 13 formed thereon.

In use, the device 2 is connectable to a load (not shown) whose weight is to be measured, i n the following m anner. The first bolt portion 4 is inserted through an aperture in a first metal plate 14 and is retained therein by means of a tightenable and releasable nut 15 locatable on a threaded portion on the outer surface of the first bolt portion 4, towards the first end 10 thereof. When the nut 15 is thightened, the nut 15 abuts a first face 16 of the first metal plate 14 and the flange 12 of the first bolt portion 4 abuts the opposing face of the plate 14, thereby clamping the first bolt portion to the first plate 14.

The first end 9 of the second bolt portion 6 is insertable through an aperture in a second metal plate 17 which is adjacent to but spaced from the first metal plate 14. The second bolt portion 6 is retained in position by means of a releasable and tightenable nut 18 locatable on a threaded portion on the outer surface of the second bolt portion 6, towards the flanged end 13 thereof such that when the nut 18 is tightened, the nut 18 abuts a first face of the second metal plate 19 and the flange 13 of the second bolt portion 6 abuts the opposing face of the plate 17, thereby clamping the second bolt portion 6 to the second plate 17.

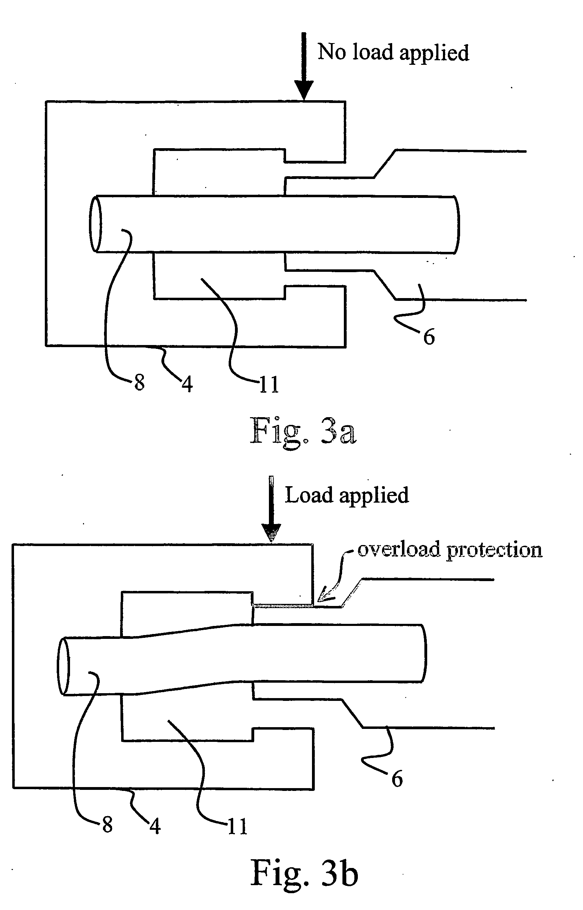

The first end 9 of the second bolt portion 6 to which the elongate member 8 is attachable, is insertable through the aperture in the first end 10 of the first bolt portion 4 terminated by the flange 12 and the first end 9 of the second bolt portion 6 thereby extends through the aperture in the first metal plate 14. The elongate member 8 is thereby retained in the cavity 11 within the first bolt portion 4, the ends of the elongate member 8 being rigidly attached to the first and second bolt portions respectively. In the assembled unloaded position, as shown in Figure 3a, the second bolt portion 6 does not contact the first bolt portion 4.

In the event of the device 2 being overloaded, as shown in Figure 3b, the elongate member 8 may break causing the flanged end 12 of the first bolt portion 4 to rest on the second bolt portion 6 thereby inhibiting the car seat attached to the first metal plate 14 from becoming detached.

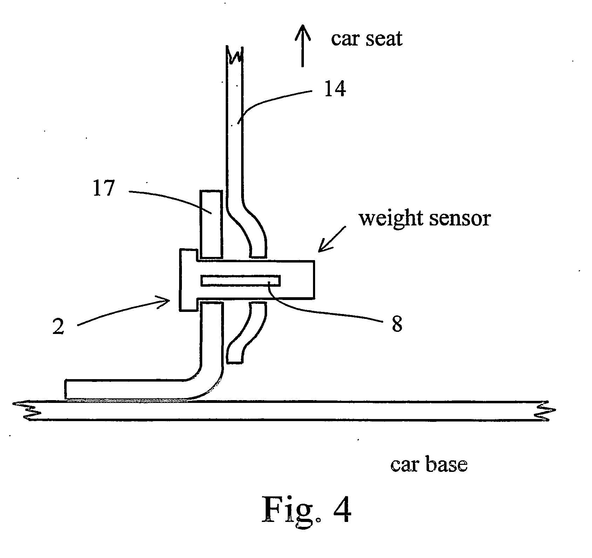

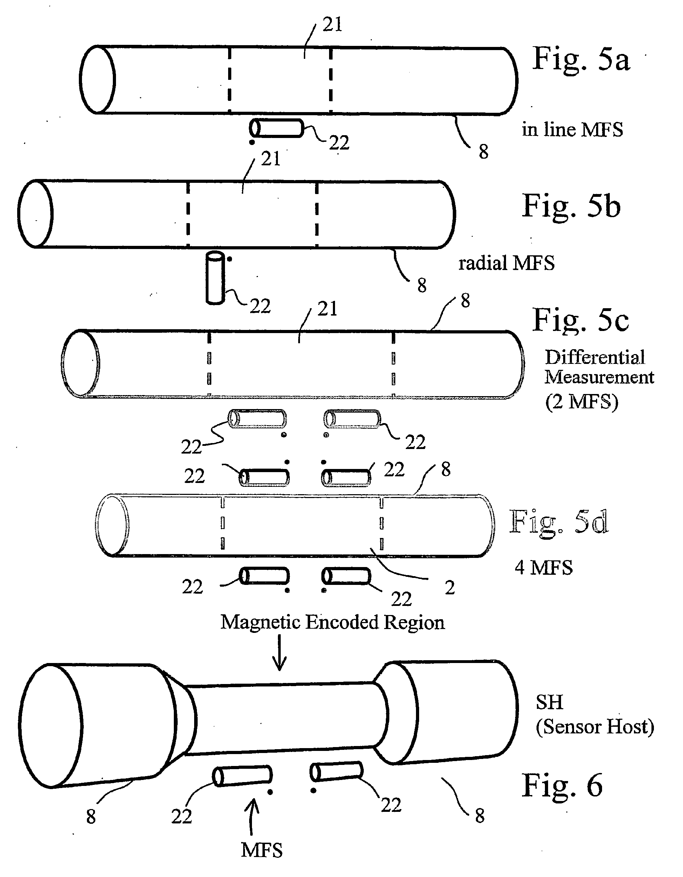

In operation, for example where the weight of an occupant of a car seat is to be measured, one or other of the first or the second metal plates 14, 17 is attached to the body of the car and the other of the first or the second metal plates 14, 17 is attached to the car seat. In the example where the second metal plate 17 is attached to the body of the car and the first metal plate 14 is attached to a car seat, as shown in Figure 4, when a load is applied to the car seat, the first metal plate 14 attached thereto will exert a downward force on the first bolt portion 4 causing the first bolt portion 4 to move downwards with the plate to which it is attached. The displacement of the first bolt portion 4 from its natural rest position causes the elongate member 8 retained therein to bend due to the exertion of a downward force on the end of the elongate member 8 attached to the first bolt portion 4, the other end of the member 8 being retained in the second bolt portion 6. The bending of the elongate member 8 is detected and measured by one or more sensors 22 or components thereof, as shown in Figures 5a to 5d and 6, which may be located in the cavity 11 in the first bolt portion 4 between the inner surface of the bore and the outer surface of the elongate member 8 and which may be attached to the surface of the elongate member 8. The output of the one or more sensors 22 may be processed by electronic circuitry (not shown) which may be located outside or within the device 2. The output of the electronic circuitry may be applied to the airbag system to control the deployment of the airbag or inhibit the deployment thereof, if the occupant of the car seat is determined to be of insufficient weight to be able to withstand the full force of an inflating airbag.

The sensor(s) 22 in the device 2 are preferably designed to function and not be destroyed by loading of the device up to breakage of the elongate member 8. Thus, the sensors 22 are preferably designed to measure loads of up to around 1400 kilograms. A defined breaking point may be formed on the elongate member 8 of the device 2, for example, a reduction in diameter, so that in the event of a n overload, the elongate member would break at this point.

The diametrical difference between the cavity 10 and the elongate member 8 is chosen to allow adequate bending of the elongate member 8. To increase the sensitivity of the device 2 and permit more deflection of the elongate member 8 under load, the thickness of the internal elongate member 8 may be reduced in the region of the s ensor(s) 22, for example, by reducing the diameter of the elongate member 8 or cutting a flat surface at that location.

In a preferred embodiment, the elongate member 8 is formed of a magnetisable material, preferably metal, such as ferromagnetic steel. Prior to assembly of the device 2, the elongate member 8 is initially fully demagnetised and then a pattern of permanent magnetisation 21 is induced into the body of the elongate member 8. The magnetised zone 21, illustrated in Figures 5a to 5d, can be as described in the Applicant's co-pending International patent applications published as WO 01179801, WO 00/13081 and WO 99/56099 which describe annular zones of longitudinal or axial magnetisation. The induced magnetisation of the elongate member 8 is presently preferred to be a zone 21 of annular longitudinal (axially-directed) magnetisation as described in WO 01/13081 or WO 01179801. It could also be a zone of circumferential magnetisation. Longitudinal magnetisation will be assumed in the following description.

The elongate member 8 may then be treated to a post-magnetisation procedure. The demagnetisation, permanent magnetisation and post-magnetisation procedures may be performed, for example, in the manner described in the Applicant's co-pending international patent applications published as WO 01/79801, WO 00/13081 and WO 99/56099. The post-magnetisation assists in fixing the pattern of magnetisation in the elongate member, improves the uniformity of the output with deflection of the elongate member and improves the stability of the performance generally. After this process, the elongate member 8 may be attached to the first and second bolt portions 4, 6 of the device 2.

In use, the magnetic field due to the magnetisation induced in the elongate member 8 may be sensed by the one or more sensors 22. The types of sensors suitable for use in the device 2 include, for example, magnetoresistive devices, Hall effect transducers, or saturating core inductors (coils). In general terms, the preferred types of sensors for use in the devices embodying the invention are magnetic field sensors. The arrangement and connection of one or more sensors 22 is described in the above-mentioned International patent application published as WO01/79801. More particularly, the use of saturating core inductors is described as connected in the type of circuit disclosed in International patent application published as WO98/52063.

The magnetic field sensors 22 may be mounted in the cavity 11, the dimensions of which, particularly the gap between the outer peripheral surface of the elongate member 8 and the first bolt portion 4, will affect the sensitivity of the device 2.

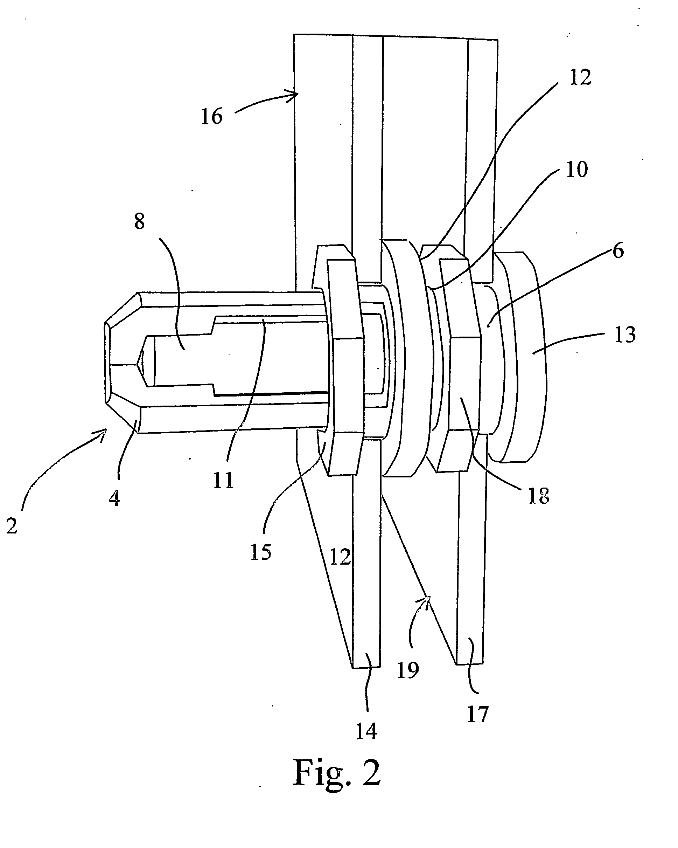

In the embodiment described above with regard to Figures 1 and 2, preferably the sensor(s) 22 include(s) one coil as shown in Figures 5a and 5b, or more than one coil, as shown in Figures 5c to 6, locatable in the cavity 11. The coil(s) of the sensor(s) 22 are preferably mounted in the cavity 11 and positioned adjacent or on the magnetised portion(s) 21 of the elongate member 8 in the plane of bending of the elongate member 8, for example, in the 6 o'clock or 12 o'clock positions as shown in Figures 5a to 5d, the sensor(s) located in the 12 o'clock position sensing bending of the elongate member 8 bending away from those sensor(s) and those sensor(s) in the 6 o'clock position sensing bending towards those sensor(s). In Figures 5a and 5b, the sensor arrangement can be oriented to detect an axial or radial component of emanated magnetic field and positioned according to the component to be detected.

In the preferred embodiments illustrated in Figures 1 to 6, as the elongate member 8 bends due to the load imposed on it, so the magnetic field due to the magnetisation therein will be distorted and the strength of the magnetic field detected by the sensor(s) will vary. This variation may be detected by the coil(s) 22. The output of the sensor(s) 22 is then processed by the electronic circuitry (not shown) to provide a control signal for the airbag system.

A plurality of the devices 2 illustrated in Figures 1 and 2, for example three or four, may be attached to each seat and the outputs of the sensors 22 associated with each device combined to determine the weight of the occupant of the seat. Preferably, the outputs of two or more sensors 22 associated with a particular device 2 are combined by connecting the sensors in series. As shown, for example, in Figure 5d, one or more pairs of sensors may be placed on opposite sides of the axial centre line of the elongate member 8 and connected in an additive manner. As far as it is presently understood, when the elongate member 8 is bent, the sensor(s) on one side will generate a lesser signal whilst the sensor on the other side will generate a greater signal. The additive connection of the signal representing the bending moment will be the difference between these signals.

In the example where the first metal plate 14 is attached to the body of the car and the second metal plate 17 is attached to a car seat, the device operates in a similar manner to that described above.

The sensor(s) are attachable to electronic circuitry which may be in the form of a PCB, an IC or the like (not shown) using one or more leads (not shown) which extend out of the device 2 through an aperture in the device, for example, through an aperture in the flanged end of the second bolt portion 6.

In a preferred embodiment, the device 2 is made in a single unit which is precalibrated prior to installation, as shown schematically in Figure 4.

To overcome variations in sensitivity due to spacing of the sensors or coils thereof from the elongate member, it may be desirable to attach the sensors to the elongate member, for example, by gluing the sensors thereto.

By suitable choice of material, for example, a soft magnetic material, the first and second bolt portions 4, 6 may act as magnetic screens to shield the elongate member 8, which may be formed of steel, from external magnetic fields.

The elongate m ember may be a shaft m ember which may be substantially cylindrical in cross-section and the diameter of the elongate member may be reduced at a location along the member to increase sensitivity of the device. The elongate member could be hollow along its length, solid or have an axially extending bore extending along a portion of its length such that it is hollow along a part of its length.

Various modifications to the devices described above may be made, for example, whilst the device has been described in the context of measuring the weight of an occupant of a car seat, the device could also be used in any system requiring measurement using a load cell, for example in the undercarriages of aircraft to measure the weight of the aircraft prior to take off.

The devices 2 embodying the invention may be used to measure or sense small loads or changes therein whilst the sensor elements 22 may be arranged to handle very high mechanical overloads. Depending on the mechanical dimensions of the device 2, the sensing range to overload range ratio may be freely chosen.

## Claims

1. A device (2) for measuring the weight of a load, comprising a first portion (4), a second portion (6) and an elongate member (8), the elongate member (8) attached to the first and second portions (4, 6), the device (2) further comprising one or more magnetic field sensor elements (22), the elongate member (8) including a magnetised region generating a magnetic field that is a function of the movement of the elongate member (8), and the one or more sensor elements (22) located in a cavity (11) in one or other of the first or second portions (4, 6) and being responsive to the emanated magnetic field; **characterized in that**
said elongate member (8) is substantially cylindrical with a reduced diameter at a location along the member to increase sensitivity of the device (2); and
said magnetic field sensor elements (22) are adapted to detect distortion of the magnetic field emanating from the elongate member (8) when a load is imposed on one or other of the first or second portions (4, 6); wherein the distortion of the magnetic field emanating from the elongate member (8) between the first and second portions (4, 6) corresponds to the weight of the applied load.

2. A device (2) according to claim 1, wherein the cavity (11) is located in and extends axially within one or other of the first or section portions (4, 6).

3. A device (2) according to any one of the preceding Claims, wherein one or more of the first portion (4), the second portion (6) and the elongate member (8) are integrally formed.

4. A device (2) according to any one of the preceding Claims, wherein one or other of the first or second portions (4, 6) is attachable to a first element which is movable on application of a load and the other or the first or second portions (4, 6) is attachable to a second element which is not movable on application of the applied load.

5. A device (2) according to any one of the preceding Claims, wherein the elongate member (8) is enclosed within one or other of the first or second portions (4, 6) in the cavity (11) therein.

6. A device (2) according to any one of the preceding Claims, wherein one or other of the first or second portions (4, 6) extends into the cavity (11) in the other of the first or second portions (4, 6).

7. A device (2) according to any one of the preceding Claims, wherein the first and second portions (4, 6) are arranged to be spatially separate before application of the load and/or until the elongate member (8) breaks under an overload condition.

8. A device (2) according to any one of the preceding Claims, wherein the one or more sensor elements (22) comprise one or more magnetic field sensors, magnetoresistive devices, Hall effect transducers, and/or one or more saturating core inductors.

9. A device (2) according to claim 8, wherein the elongate member (8) has one or more magnetised regions, the one or more sensor elements (22) being responsive to a load dependent field emanated by the one or more magnetised regions.

10. A device (2) according to claim 9, wherein the one or more sensor elements (22) comprise one or more coils locatable in the cavity (11), the one or more coils being arranged to detect distortion of the magnetic field emanating from the elongate member (8) under load.

11. A device (2) according to any one of the preceding Claims, wherein the elongate member (8) is formed of a ferromagnetic material such as ferromagnetic steel.

12. A device (2) according to any one of Claims 8 to 11, wherein the one or more magnetic field sensor elements (22) are arranged to detect variations in the magnetic field due to bending of the elongate member (8) under load, said variations being proportional to the weight of the applied load.

13. A device (2) according to any one of the preceding Claims, further comprising electronic circuitry to process the Output of the sensor elements (22) to determine the weight of the applied load in use.

14. A device (2) according to Claim 13, wherein the electronic circuitry is located within the first or second portions (4, 6).

15. A device (2) according to claim 13, wherein the electronic circuitry is located outside one or other of the first or second portions (4, 6).

16. A device (2) according to any one of the preceding claims, wherein the elongate member (8) is screwed or press-fitted into the first and/or the second portion.

17. A device (2) according to any one of the preceding claims wherein the elongate member (8) bends in a bending plane on application of a load in use, and the one or more sensor elements (22) are locatable in the plane of bending of the elongate member (8) to detect variations in magnetic field during bending of the elongate member (8).

18. A device (2) according to any one of the preceding claims, wherein the device (2) is adapted to be attached to a car seat and/or the body of the car to measure the weight of an occupant sitting in the car seat in use.

19. A device (2) according to claim 18 wherein the one or more sensor elements (22) are connectable to a mechanism for controlling deployment of an airbag in the car such that if the sensor elements (22) determine that the weight of an occupant of a car seat is below a predetermined amount, deployment of the airbag is controlled.

20. A device (2) according to any one of the preceding claims, wherein the device (2) includes more than one sensor element.

21. A device (2) according to claim 20, wherein the sensor elements (22) are connected in series and the Outputs of the sensor elements (22) combined to determine the total weight or weight distribution of the applied load in use.

22. A system for measuring the weight or weight distribution of a load comprising one or more of the devices (2) according to any one of the preceding claims, and preferably three or four devices.

23. A system according to claim 22, wherein the outputs of the sensor elements (22) of each device (2) are connected to determine the total weight or weight distribution of the applied load in use.

24. Use of a device (2) according to claim 1 for measuring the weight of a load.

## Patentansprüche

1. Einrichtung (2) zur Erfassung des Gewichts einer Ladung, welche einen ersten Bereich (4), einen zweiten Bereich (6) und ein längliches Element (8) umfasst, worin das längliche Element (8) an den ersten und zweiten Bereich (4, 6) angebracht ist, worin die Einrichtung (2) weiter ein oder mehrere Magnetfeld-Sensorelemente (22) umfasst, worin das länglich Element (8) einen magnetisierten Bereich umfasst, der ein Magnetfeld erzeugt, das eine Funktion der Bewegung des länglichen Elements (8) und des einen oder der mehreren Sensorelemente (22) ist, die in einer Vertiefung (11) in dem einen oder anderen des ersten oder zweiten Bereichs (4, 6) angeordnet ist, und auf das ausgestrahlte Magnetfeld reagiert, **dadurch gekennzeichnet, dass**
das längliche Element (8) im Wesentlichen zylindrisch ist und einen verringerten Durchmesser an einer Stelle entlang des Elements aufweist, um die Sensitivität der Einrichtung (2) zu erhöhen; und
worin die Magnetfeld-Sensorelemente (22) angepasst sind, eine bei Aufbringen einer Ladung an einem oder dem anderen des ersten oder zweiten Bereichs (4, 6) auftretende Verzerrung des von dem länglichen Element (8) ausgestrahlten Magnetfeldes zu erfassen; worin die Verzerrung des Magnetfeldes, das von dem länglichen Element (8) zwischen dem ersten und zweiten Bereich (4, 6) ausgestrahlt wird, dem Gewicht der aufgebrachten Ladung entspricht.

2. Einrichtung (2) nach Anspruch 1, worin die Vertiefung (11) in einem oder dem anderen des ersten und zweiten Bereichs (4, 6) angeordnet ist, und sich axial darin erstreckt.

3. Einrichtung (2) nach einem der vorstehenden Ansprüche, worin einer oder mehrere des ersten Bereichs (4), des zweiten Bereichs (6) und des länglichen Elements (8) einstückig ausgebildet sind.

4. Einrichtung (2) nach einem der vorstehenden Ansprüche, worin der eine oder der andere des ersten oder zweiten Bereichs (4, 6) an das erste, bei Aufbringen einer Last bewegbare Element angebracht werden kann, und worin der andere des ersten und zweiten Bereichs (4, 6) an ein zweites Element angebracht werden kann, das bei Aufbringen einer Last nicht bewegbar ist.

5. Einrichtung (2) nach einem der vorstehenden Ansprüche, worin das längliche Element (8) in dem einen oder dem anderen des ersten und zweiten Bereichs (4, 6) in der Vertiefung (11) darin umfasst ist.

6. Einrichtung (2) nach einem der vorstehenden Ansprüche, worin sich der eine oder der andere des ersten und zweiten Bereichs (4, 6) in die Vertiefung des jeweils anderen des ersten und zweiten Bereich (4, 6) erstreckt.

7. Einrichtung (2) nach einem der vorstehenden Ansprüche, worin der erste und zweiten Bereich (4, 6) räumlich beabstandet angeordnet ist, bevor die Ladung aufgebracht ist, und/oder bis das längliche Element (8) unter einer Überbelastungsbedingung bricht.

8. Einrichtung (2) nach einem der vorstehenden Ansprüche, worin der eine oder der andere der Sensorelemente (22) ein oder mehrere Magnetfeld-Sensoren, Magnetwiderstrandbeständige Einrichtungen, Hall-Effekt-Transduktoren und/oder ein oder mehrere Kernsättigungs-Induktoren umfasst.

9. Einrichtung (2) nach Anspruch 8, worin das längliche Element (8) ein oder mehrere magnetisierte Bereiche aufweist, worin einer oder mehrere Sensorelemente (22) auf eine Ladung anspricht, die von dem Feld abhängt, das von dem einen oder mehreren magnetisierten Bereichen ausgestrahlt wird.

10. Einrichtung (2) nach Anspruch 9, worin der eine oder mehrere Sensorelemente (22) ein oder mehrere Spulen umfasst, die in der Vertiefung (11) angeordnet werden können, worin die eine oder mehreren Spulen angeordnet sind, um die Verzerrung des Magnetfeldes bei Beladung zu erfassen, das von dem länglichen Element (8) ausgestrahlt wird.

11. Einrichtung (2) nach einem der vorstehenden Ansprüche, worin das längliche Element (8) aus einem ferromagnetischen Material, wie ferromagnetischem Stahl besteht.

12. Einrichtung (2) nach einem der Ansprüche 8 bis 11, worin der eine oder mehrere der Magnetfeld-Sensorelemente (22) angeordnet sind, um Änderungen des Magnetfelds aufgrund der Verwindung des länglichen Elements (8) bei Beladung zu erfassen, worin die Änderungen proportional zum Gewicht der aufgebrachten Ladung ist.

13. Einrichtung (2) nach einem der vorstehenden Ansprüche, welche weiter einen elektrischen Schaltkreis umfasst, um die Ausgabe der Sensor-Elemente (22) zu verarbeiten, um das Gewicht der aufgebrachten Ladung Last bei Verwendung zu bestimmen.

14. Einrichtung (2) nach Anspruch 13, worin der elektrische Schaltkreis in dem ersten und zweiten Bereich (4, 6) angeordnet ist.

15. Einrichtung (2) nach Anspruch 13, worin der elektrische Schaltkreis außerhalb des einen oder des anderen des ersten und zweiten Bereichs (4, 6) angeordnet ist.

16. Einrichtung (2) nach einem der vorstehenden Ansprüche, worin das längliche Element (8) in den ersten und/oder den zweiten Bereich verschraubt oder pressgepasst ist.

17. Einrichtung (2) nach einem der vorstehenden Ansprüche, worin sich das längliche Element (8) bei Auftragen der Ladung bei Verwendung in einer Biegungsebene biegt, und worin das eine oder das andere der Sensor-Elemente (22) in der Biegungsebene des länglichen Elements (8) angeordnet werden kann, um Änderungen des Magnetfelds während des Biegevorgangs des länglichen Elements (8) zu erfassen.

18. Einrichtung (2) nach einem der vorstehenden Ansprüche, worin die Einrichtung (2) angepasst ist, um an einen Automobilsitz und/oder die Automobil-Chassis angebracht zu werden, um das Gewicht eines Passagiers in dem Automobilsitz bei Verwendung zu messen.

19. Einrichtung (2) nach Anspruch 18, worin das eine oder die mehreren der Sensor-Elemente (22) mit einem Mechanismus verbunden werden können, um das Auslösen eines Airbags in dem Automobil zu steuern, so dass dann, wenn mittels der Sensorelemente (22) festgestellt wird, dass der Nutzer eines Automobilsitzes ein bestimmtes Gewicht unterschreitet liegt, das Auslösen des Airbags gesteuert wird.

20. Einrichtung (2) nach einem der vorstehenden Ansprüche, worin die Einrichtung (2) ein oder mehrere Sensorelemente umfasst.

21. Einrichtung (2) nach Anspruch 20, worin die Sensorelemente (22) in Reihe geschaltet sind, und worin die Ausgaben der Sensorelemente (22) kombiniert werden, um das Gesamtgewicht oder die Gewichtsverteilung der aufgebrachten Ladung bei Verwendung zu bestimmen.

22. Einrichtung (2) zum Erfassen des Gewichts oder der Gewichtsverteilung einer Last umfassend, ein oder mehrere der Einrichtung (2) nach einem der vorstehenden Ansprüche, und vorzugsweise drei oder vier Einrichtungen (2).

23. System nach Anspruch 22, worin die Ausgaben der Sensorelemente (22) jeder Einrichtung (2) verbunden sind, um das Gesamtgewicht oder die Gewichtsverteilung der aufgebrachten Ladung bei Verwendung zu bestimmen.

24. Verwendung einer Einrichtung (2) nach Anspruch 1 zum Bestimmen einer Ladung.

## Revendications

1. Un dispositif (2) pour mesurer le poids d'une charge comprenant une première portion (4), une seconde portion (6) et un membre allongé (8), le membre allongé (8) étant attaché aux première et seconde portions (4, 6), le dispositif (2) comprenant en outre un ou plusieurs éléments de sonde de champ magnétique (22), le membre allongé (8) comportant une région magnétisée générant un champ magnétique qui est une fonction du mouvement du membre allongé (8) et l'un ou plusieurs éléments de sonde (22) étant logés dans une cavité (11) dans l'une ou l'autre des première ou seconde portions (4, 6) et répondant au champ magnétique émané, **caractérisé en ce que**
ledit membre allongé (8) est substantiellement cylindrique avec un diamètre réduit à un emplacement le long du membre pour augmenter la sensibilité du dispositif (2) ; et lesdits éléments de sonde de champ magnétique (22) sont adaptés pour détecter la distorsion du champ magnétique émanant du membre allongé (8) lorsqu'une charge est exercée sur l'une ou l'autre des première ou seconde portions (4, 6) ; dans lequel la distorsion du champ magnétique émanant du membre allongé (8) entre les première et seconde portions (4, 6) correspond au poids de la charge exercée.

2. Un dispositif (2) selon la revendication 1 dans lequel la cavité (11) est logée dans et s'étend axialement au sein de l'une ou l'autre des première et seconde portions (4, 6).

3. Un dispositif (2) selon l'une des revendications précédentes dans lequel une ou plusieurs de la première portion (4), de la seconde portion (6) et le membre allongé (8) sont de forme intégrée.

4. Un dispositif (2) selon l'une des revendications précédentes dans lequel l'une ou l'autre des première et seconde portions (4, 6) est rattachable à un premier élément qui est mobile lors de l'application d'une charge, et l'autre des première ou seconde portions (4, 6) est rattachable à un second élément qui n'est pas mobile lors de l'application de la charge exercée.

5. Un dispositif (2) selon l'une des revendications précédentes dans lequel le membre allongé (8) est inséré au sein dans la cavité (11) de l'une ou l'autre des première ou seconde portions (4, 6).

6. Un dispositif (2) selon l'une des revendications précédentes dans lequel l'une ou l'autre des première ou seconde portions (4, 6) s'étend à l'intérieur de la cavité (11) dans l'autre des première et seconde portions (4, 6).

7. Un dispositif (2) selon l'une des revendications précédentes dans lequel les première ou seconde portions (4,6) sont arrangées pour être séparées dans l'espace avant l'application de la charge et/ou jusqu'à ce que le membre allongé (8) casse dans une condition de surcharge.

8. Un dispositif (2) selon l'une des revendications précédentes dans lequel les un ou plusieurs éléments de sonde (22) comprennent une ou plusieurs sondes de champ magnétique, des dispositifs magnétorésistants, des capteurs d'effet Hall et/ou un ou plusieurs capteurs à noyau saturant.

9. Un dispositif (2) selon la revendication 8 dans lequel le membre allongé (8) comporte une ou plusieurs régions magnétisées, les un ou plusieurs éléments de sonde (22) répondant à un champ dépendant de la charge émanant de l'une ou plusieurs des régions magnétisées.

10. Un dispositif (2) selon la revendication 9 dans lequel l'un ou plusieurs des éléments de sonde (22) comprennent une ou plusieurs bobines logeables dans la cavité (11), les une ou plusieurs bobines étant arrangées pour détecter la distorsion de champ magnétique émanant du membre allongé (8) sous charge.

11. Un dispositif (2) selon l'une des revendications précédentes dans lequel le membre allongé (8) est formé d'un matériau ferromagnétique tel que l'acier ferromagnétique.

12. Un dispositif (2) selon l'une des revendications 8 à 11 dans lequel l'un ou plusieurs des éléments de sonde de champ magnétique (22) sont arrangés pour détecter des variations de champ magnétique dues à la courbure du membre allongé (8) sous charge, lesdites variations étant proportionnelles au poids de la charge exercée.

13. Un dispositif (2) selon l'une des revendications précédentes comprenant en outre un circuit électronique pour traiter le signal de sortie des éléments de sonde (22) afin de déterminer le poids de la charge exercée en utilisation.

14. Un dispositif (2) selon la revendication 13 dans lequel le circuit électronique est logé à l'intérieur des première ou seconde portions (4, 6).

15. Un dispositif (2) selon la revendication 13 dans lequel le circuit électronique est logé à l'extérieur des première ou seconde portions (4, 6).

16. Un dispositif (2) selon l'une des revendications précédentes dans lequel le membre allongé est vissé ou embouti dans la première et/ou seconde portion.

17. Un dispositif (2) selon l'une des revendications précédentes dans lequel le membre allongé (8) se courbe dans un plan de courbure lors de l'exercice de la charge en utilisation et les un ou plusieurs éléments de sonde (22) sont localisables dans le plan de courbure du membre allongé (8) afin de détecter des variations de champ magnétique lors de la courbure du membre allongé (8).

18. Un dispositif (2) selon l'une des revendications précédentes dans lequel le dispositif (2) est adapté pour être fixé à un siège de voiture et/ou au chassis de la voiture pour mesurer le poids d'un occupant assis dans le siège de voiture utilisée.

19. Un dispositif (2) selon la revendication 18 dans lequel l'un ou plusieurs des éléments de sonde (22) sont connectables à un mécanisme pour contrôler le déploiement d'un coussin d'air dans la voiture, de sorte que les éléments de sonde (22) déterminent que lorsque le poids d'un occupant d'un siège de voiture est inférieur à un montant prédéterminé, le déploiement du coussin d'air est contrôlé.

20. Un dispositif (2) selon l'une des revendications précédentes dans lequel le dispositif (2) comporte plus d'un élément de sonde.

21. Un dispositif (2) selon la revendication 20 dans lequel les éléments de sonde (22) sont connectés en série et les signaux de sortie des éléments de sonde (22) sont combinés pour déterminer le poids total ou la distribution du poids de la charge exercée en utilisation.

22. Un système pour mesurer le poids ou la distribution de poids d'une charge comprenant un ou plusieurs des dispositifs (2) selon l'une des revendications précédentes et de préférence trois ou quatre dispositifs.

23. Un système selon la revendication 22 dans lequel les signaux de sortie des éléments de sonde (22) de chaque dispositif (2) sont connectés pour déterminer le poids total ou la distribution de poids de la charge exercée en utilisation.

24. Utilisation d'un dispositif (2) selon la revendication 1 pour mesurer le poids d'une charge.
